# EUROPÄISCHE PATENTSCHRIFT

(11) **EP 3 043 074 B1**
(45) Veröffentlichungstag und Bekanntmachung des Hinweises auf die Patenterteilung: **03.10.2018**
(21) Anmeldenummer: 15195426.0
(22) Anmeldetag: 19.11.2015
(51) Int. Cl.: F04D 17/16, F04D 19/04, F04D 29/056, F04D 29/059, F16C 27/04, F16C 35/04, F04D 29/66, F16C 19/06, F16C 32/04

(54) **ANORDNUNG ZUR LAGERUNG EINER WELLE EINER VAKUUMPUMPE**
ASSEMBLY FOR STORING THE SPINDLE OF A VACUUM PUMP
SYSTÈME DE PALLIER D'ARBRE DE POMPE À VIDE

(30) Priorität: 06.01.2015 DE 102015100048
(43) Veröffentlichungstag der Anmeldung: 13.07.2016
(73) Patentinhaber: Pfeiffer Vacuum GmbH, 35614 Aßlar (DE)
(72) Erfinder: Rippl, Andreas, 35578 Wetzlar (DE)
(74) Vertreter: Knefel, Cordula

(56) Entgegenhaltungen:
- EP-A1- 1 619 400
- EP-B1- 1 891 332
- DE-A1- 19 804 768
- DE-A1-102010 062 793
- DE-A1-102013 210 109
- DE-T2- 60 022 715
- GB-A- 191 020 251

## Beschreibung

Die Erfindung betrifft eine Anordnung zur Lagerung einer Welle einer Vakuumpumpe.

Vakuumpumpen spielen in der Vakuumtechnik eine wichtige Rolle und werden in den unterschiedlichsten technischen Anwendungen zum Absaugen von vornehmlich gasförmigen Medien und zur Evakuierung von Hohlräumen eingesetzt. Dabei kommen unter anderem Turbomolekularpumpen zum Einsatz, welche im molekularen, das heißt, nicht viskosen Bereich arbeiten und dazu geeignet sind, ein Vakuum mit einer sehr hohen Reinheit zu erzeugen. Turbomolekularpumpen umfassen üblicherweise eine Rotationseinheit, die aus einem Stator und einem gegenüber dem Stator drehbaren Rotor besteht, wobei der Rotor zur Erzeugung des hochreinen Vakuums mit üblicherweise sehr hohen Drehzahlen drehend angetrieben wird. Bei diesen sehr hohen Drehzahlen kommt einer möglichst reibungsfreien Lagerung des Rotors gegenüber dem Stator eine besondere Bedeutung zu. Diese Lagerung wird üblicherweise durch zwei Lager erreicht, die ein im Bereich der Saugöffnung, das heißt der Hochvakuumseite der Pumpe angeordnetes Lager und ein in der Nähe der Gasaustrittsöffnung, das heißt der sogenannten Vorvakuumseite der Pumpe angeordnetes Lager umfassen.

Da das an der Hochvakuumseite vorgesehene Lager dabei mit dem zu evakuierenden Volumen in Verbindung steht, muss dieses Lager möglichst verschmutzungsfrei ausgeführt sein, um eine Verschmutzung des zu evakuierenden Volumens, beziehungsweise der darin enthaltenen Medien zu verhindern.

Um die Anforderungen an eine möglichst reibungsarme und gleichzeitig verschmutzungsfreie Lagerung zu erfüllen, ist es bekannt, das an der Hochvakuumseite vorgesehene Lager als Permanentmagnetlager auszuführen, welches beispielsweise einen an den Stator angebrachten Magnetringstapel und einen an dem Rotor angebrachten Magnetringstapel umfassen kann, die ineinander angeordnet sind und durch ihre gegenseitige magnetische Abstoßung eine drehbare radiale Lagerung gewährleisten.

Das zweite Lager ist üblicherweise als Wälzlager ausgebildet. Das vorvakuumseitige Lager ist dazu vorgesehen, radiale und axiale Lagerkräfte aufzunehmen. Hierzu ist eine entsprechende Lageranordnung vorzunehmen, damit die axialen und radialen Lagerkräfte entsprechend aufgenommen werden können.

Zum Stand der Technik (EP 1 891 332 B1, EP 2 126 365 B1) gehört eine Lageranordnung für ein Lager mit einer nachgiebigen Abstützung, wobei die nachgiebige Abstützung aus einem metallischen Material gebildet ist und innere und äußere ringförmige Teile umfasst, die durch eine Mehrzahl flexibler Elemente verbunden sind. Diese zum Stand der Technik gehörende Abstützung weist den Nachteil auf, dass die elastischen Abstützungen eine relativ große Masse aufweisen, da sie aus Vollmaterial gebildet sind. Hierdurch sind die elastischen Lagerabstützungen, die zum Stand der Technik gehören, relativ teuer.

Weiterhin gehört zum Stand der Technik (EP 1 619 400 A1) eine Lagerunterstützung für Kugellager. Die Lagerunterstützung weist einen äußeren und einen inneren Ring auf, die durch elastische Elemente miteinander verbunden sind. Diese zum Stand der Technik gehörende Lagerunterstützung weist den Nachteil auf, dass die radiale Steifigkeit der Lagerunterstützung relativ gering ist.

Weiterhin gehört zum Stand der Technik (GB 20251 A A.D.) eine Lagerunterstützung. In einer Nabe a³ ist eine Hülse b vorgesehen. Diese Hülse weist spiralförmige Schlitze b² auf. Durch diese spiralförmigen Schlitze und Schrauben, die mit ihren Köpfen in Ausnehmungen der Hülse mit den spiralförmigen Schlitzen greifen und in dem Gehäuse der Nabe fixiert sind, kann die Hülse zusammengepresst werden. Die Hülse wird in einer vorbestimmten Lage mittels der Schrauben in der Nabe angeordnet. Gemäß diesem Stand der Technik ist nicht die Lagerung einer Welle einer Vakuumpumpe mit zwei Lagern offenbart.

Weiterhin gehört zum Stand der Technik (DE 10 2010 062 793 A1) eine elektrische Maschine mit einer verbesserten Axiallagerung. Gemäß diesem Stand der Technik ist eine geschlitzte Hülse offenbart, die auf einer Ankerwelle einer elektrischen Maschine angeordnet ist. Die Hülse weist einen auf einer Mantellinie in axialer Richtung verlaufenden Schlitz auf. Durch die geschlitzte Hülse ist eine Entkopplung des Außendurchmessers der Ankerwelle von der Wahl des Wälzlagers möglich. Diese zum Stand der Technik gehörende Hülse kann dahingehend verbessert werden, dass sie reproduzierbar ist und sich stabil, insbesondere zeitstabil verhält.

Das der Erfindung zugrunde liegende technische Problem besteht darin, eine Anordnung zur Lagerung einer Welle einer Vakuumpumpe anzugeben, die preisgünstig herstellbar ist und sich reproduzierbar und stabil, beziehungsweise zeitstabil verhält.

Diese technische Problem wird durch eine Anordnung zur Lagerung einer Welle einer Vakuumpumpe mit den Merkmalen gemäß Anspruch 1 gelöst.

Die erfindungsgemäße Anordnung zur Lagerung einer Welle einer Vakuumpumpe mit einem Gehäuse mit einem ersten Lager, welches Kräfte in Richtung der Wellenachse erzeugt und eine axiale Steifigkeit besitzt, mit einem zweiten Lager, welches als Wälzlager ausgebildet ist und in einer Halterung mit axialer und radialer Steifigkeit angeordnet ist, zeichnet sich dadurch aus, dass die Halterung eine Hülse aufweist und dass die Hülse wenigstens einen Schlitz aufweist, der schraubenlinienförmig in der Hülse angeordnet ist.

Die erfindungsgemäße Anordnung zur Lagerung der Welle weist den Vorteil auf, dass über die Ausbildung der Hülse die Halterung mit einem geringen Materialaufwand herstellbar ist. Die Wandstärke der Hülse hängt von der erforderlichen axialen und radialen Steifigkeit ab. Die Halterung kann mittels der Parameter Wandstärke, Steigung der schraubenlinienförmigen Schlitze, Material der Hülse und Anzahl der schraubenlinienförmigen Schlitze axial und radial entsprechend abgestimmt werden.

Je nach Wahl des Materials, aus dem die Hülse besteht, lässt sich darüber hinaus das Gewicht der Halterung reduzieren, was ebenfalls ein Vorteil gegenüber dem Stand der Technik darstellt.

Die erfindungsgemäße Lagerfassung weist den Vorteil auf, dass sie reproduzierbar ist und sich stabil, insbesondere zeitstabil verhält, da alle wichtigen Merkmale der Lagerfassung ausschließlich durch die Geometrie und das Elastizitätsmodul bestimmt werden. Hierdurch weist die erfindungsgemäße Lagerfassung den weiteren Vorteil auf, dass eine geringe Exemplarstreuung für die Serienfertigung resultiert.

Gemäß einer vorteilhaften Ausführungsform der Erfindung sind drei Schlitze in der Hülse angeordnet.

Es können jedoch auch mehr oder weniger Schlitze angeordnet werden.

Die Schlitze sind vorteilhaft symmetrisch in der Hülse angeordnet, um in allen Richtung eine identische radiale sowie axiale Steifigkeit zu gewährleisten.

Die Steifigkeit der Halterung ist in axialer Richtung vorteilhaft größer als in radialer Richtung. Dies ist für die Lagerung der Rotorwelle wichtig.

Gemäß einer weiteren vorteilhaften Ausführungsform sind die wenigstens zwei schraubenlinienförmigen Schlitze parallel zueinander angeordnet. Das bedeutet, dass sämtliche Schlitze den gleichen Steigungswinkel aufweisen. Der Steigungswinkel der verschiedenen Schlitze kann über die gesamte Höhe der Hülse gleichbleibend ausgebildet sein. Der Steigungswinkel kann jedoch auch variieren. Das bedeutet, dass zum Beispiel in einem ersten Abschnitt ein geringerer Steigungswinkel vorliegt als in einem zweiten Abschnitt der Hülse.

Es besteht auch die Möglichkeit, den wenigstens einen schraubenlinienförmigen Schlitz lediglich in einem ersten Abschnitt der Hülse anzuordnen und einen zweiten Abschnitt der Hülse ohne Schlitz auszubilden.

Die Wahl dieser Ausführungsformen hängt von der geforderten axialen und radialen Steifigkeit ab.

Gemäß einer weiteren vorteilhaften Ausführungsform der Erfindung sind die schraubenlinienförmigen Schlitze radialsymmetrisch in der Hülse angeordnet. Das bedeutet, dass die Anfangspunkte bei drei Schlitzen beispielsweise im Abstand von jeweils 120° angeordnet sind. Da die Steigung sämtlicher Schlitze vorteilhaft ebenfalls gleich ist, ist die Hülse derart ausgestaltet, dass die axiale und radiale Steifigkeit in allen Richtungen gleich groß ist um eine optimale Lagerung der Welle in der Vakuumpumpe zu gewährleisten.

Die schraubenlinienförmigen Schlitze sind vorteilhaft tordierend ausgebildet. Das heißt, die Arme führen eine Torsion aus. Bei einer Torsion wird eine Längenänderung vermieden.

Gemäß einer weiteren vorteilhaften Ausführungsform ist die Hülse aus Metall und/oder Kunststoff und/oder piezokeramischem Metall und/oder kohlefaserverstärktem Kunststoff gebildet.

Eine Hülse aus Metall weist den Vorteil auf, dass die Halterung beispielsweise einstückig mit Befestigungsflansch und Aufnahmeplatten für das Wälzlager ausgebildet sein kann.

Die Ausbildung der Hülse aus Kunststoff weist den Vorteil auf, dass eine Gewichtsreduzierung stattfinden kann und dass das Elastizitätsmodul abweichend von einer Metallhülse ausgebildet werden kann.

Die Ausbildung aus einem piezokeramischen Metall weist den besonderen Vorteil auf, dass eine Verformung der Hülse gemessen werden kann. Es besteht auch die Möglichkeit, die Steifigkeit über ein Anlegen eines Stromes und damit einer Materialveränderung zu verändern.

Die Verwendung eines kohlefaserverstärkten Kunststoffes weist den Vorteil auf, dass die Hülse wiederum sehr leicht gebaut werden kann bei einer langen Lebensdauer der Hülse.

Gemäß einer vorteilhaften Ausführungsform der Erfindung entspricht ein Faserwicklungswinkel eines kohlefaserverstärkten Kunststoffes einem Steigungswinkel der schraubenlinienförmigen Schlitze. Diese Ausbildung ist vorteilhaft, um die Matrix der Kohlefaser nicht zu zerstören.

Gemäß einer vorteilhaften Ausführungsform der Erfindung, ist an der Hülse ein Lagerschild für das Wälzlager angeordnet. Dieses Lagerschild dient als Verbindung zwischen der Hülse und dem Wälzlager.

Eine weitere vorteilhafte Ausführungsform der Erfindung sieht vor, dass die Halterung einen Flansch aufweist, mit dem die Hülse an einem statorseitigen Gehäuseteil der Vakuumpumpe befestigbar ist. Der Flansch weist vorteilhaft Bohrungen auf, durch die Schrauben oder andere Befestigungsmittel geführt werden können, um den Flansch an einem statorseitigen Gehäuseteil zu befestigen.

Gemäß einer weiteren vorteilhaften Ausführungsform der Erfindung ist das Lagerschild für das Wälzlager und/oder der Flansch aus Metall gebildet. Das bedeutet, dass wegen der Stabilität und der Befestigungsmöglichkeiten es sinnvoll ist, das Lagerschild für das Wälzlager und/oder den Flansch aus Metall auszubilden. Die Hülse selbst kann, wie schon ausgeführt, aus einem anderen Material gebildet sein.

Eine weitere vorteilhafte Ausführungsform der Erfindung sieht vor, dass das Wälzlager als ölgeschmiertes Wälzlager ausgebildet ist und dass der wenigstens eine Schlitz als wenigstens teilweise ölfreier Schlitz ausgebildet ist.

Gemäß der Erfindung ist es vorgesehen, das Wälzlager mit einer Mindermengenölschmierung zu betreiben, so dass die Schlitze nicht mit Öl beaufschlagt werden. Es erfolgt kein Füllen der Schlitze der Hülse mit Öl. Dies weist den Vorteil auf, dass die Ölmenge deutlich reduziert werden kann. Ein lasttragender Dämpfungsfilm in den Schlitzen ist nicht erforderlich, da über die Geometrie und Materialwahl der Hülse selbst die entsprechend geforderten Werte für die axiale und radiale Steifigkeit einstellbar sind.

Eine weitere mögliche Ausführungsform der Erfindung sieht vor, dass auf der Hülse wenigstens teilweise eine zweite Hülse und/oder ein Schlauch angeordnet ist. Hierdurch wird eine zusätzliche Dämpfungswirkung erzielt. Vorteilhaft ist der Schlauch oder die zweite Hülse aus einem elastischen Material gebildet. Gemäß einer vorteilhaften Ausführungsform ist der Schlauch aus einem elastischen Kunststoff oder Gummi gebildet. Hierdurch wird eine einstellbare Dämpfungswirkung in Bezug auf die Hülse erreicht.

Die zweite Hülse weist vorteilhaft eine größere Elastizität auf als die erste Hülse. Dies ist vorteilhaft, damit die Elastizität der ersten Hülse trotz der Anordnung der zweiten Hülse oder des Schlauches noch Einfluss auf die Gesamtsteifigkeit hat.

Es besteht auch die Möglichkeit, glasfaserverstärkten Kunststoff für die Hülse vorzusehen und eine Piezofolie anzuordnen. Hierdurch wird ein sensitives beziehungsweise aktives Festkörpergelenk erhalten.

Gemäß einer weiteren vorteilhaften Ausführungsform der Erfindung ist vorgesehen, dass für die Ölschmierung des Wälzlagers eine Ölpumpe vorgesehen ist. Für das Öl kann ein Ölkreislauf vorgesehen sein. Das für die Schmierung des Wälzlagers erforderliche Öl wird von der Pumpe durch entsprechende Kanäle dem Wälzlager zugeführt und beispielsweise durch weitere Kanäle wieder abgeführt.

Vorteilhaft ist ein Ölkreislauf vorgesehen, bei dem sich die Pumpwirkung allein aus der Geometrie der angeordneten Mittel ergibt, beispielsweise durch die Fliehkraft und/oder Schwerkraft unterstützt wird. Ein derartiges Mittel kann eine Spritzmutter sein.

Gemäß einer vorteilhaften Ausführungsform der Erfindung ist eine Spritzmutter und wenigstens ein Filzpaket für das Öl vorgesehen. Die Spritzmutter ist vorteilhaft radialsymmetrisch in der Hülse angeordnet und sich konisch erweiternd in Richtung Wälzlager ausgebildet. Die Spritzmutter ist auf der Welle angeordnet. Dreht sich die Welle, wandert das Öl durch die Fliehkraft in Richtung des größeren Durchmessers der Spritzmutter, das heißt in Richtung Wälzlager.

Das Filzpaket dient zur Aufnahme und Speicherung des Öles.

Gemäß einer weiteren vorteilhaften Ausführungsform der Erfindung ist an der Hülse ein Lagerschild angeordnet, an dem wiederum die Aufnahme für das Wälzlager angeordnet ist.

Das Lagerschild ist vorteilhaft als Platte ausgebildet. Das Lagerschild ist vorteilhaft an und/oder in der Hülse eingeklebt oder eingeschrumpft. Auf jeden Fall ist das Lagerschild fest mit der Hülse verbunden.

Das Wälzlager ist vorteilhaft in dem Lagerschild verschraubt. Durch diese Ausführungsform ist es möglich, das Wälzlager in einfacher Art und Weise in der Aufnahme in der Hülse zu montieren und bei Bedarf zu demontieren.

Durch die erfindungsgemäße Ausbildung der Hülse ist die erfindungsgemäße Lagerfassung gering momentstabil, wodurch der spielfreie Einbau des Wälzlagers ermöglicht wird. Fluchtungsfehler bedingt durch Toleranzen bei der Fertigung, beziehungsweise Missweisung durch Magnetlager führen zu keinen störenden Zwangskräften im Wälzlager.

Das Wälzlager ist vorteilhaft als Kugellager ausgebildet. Es können jedoch auch andere Ausführungsformen des Wälzlagers vorgesehen sein.

Die erfindungsgemäße Halterung in der Anordnung zur Lagerung einer Welle einer Vakuumpumpe zeichnet sich dadurch aus, dass sie preiswert herstellbar ist, dass die geforderte axiale und radiale Steifigkeit einfach durch Vorgabe des Materials, der Wandstärke, der Steigung des wenigstens einen schraubenlinienförmigen Schlitzes, der Anzahl der Windungen und des Durchmessers der Hülse entsprechend abgestimmt werden kann.

Der wenigstens eine schraubenlinienförmige Schlitz kann zum Beispiel durch Lasern der Einschnitte hergestellt werden. Hierdurch kann erreicht werden, dass die Axialbewegung in beiden Richtungen definiert begrenzt wird.

Für eine Cross-Channel-Pumpe ist denkbar, dass die Struktur über dem Rotor liegt und so als Stator für das Pumpsystem benutzt werden kann. Hierdurch sind sehr kleine Radialspalte realisierbar.

Weitere Merkmale und Vorteile der Erfindung ergeben sich anhand der zugehörigen Zeichnung, in der mehrere Ausführungsbeispiele einer erfindungsgemäßen Halterung nur beispielhaft dargestellt sind. In der Zeichnungen zeigen:
- Fig. 1: eine Vakuumpumpe in perspektivischer Ansicht;
- Fig. 2: einen Axialschnitt der in Fig. 1 gezeigten Vakuumpumpe;
- Fig. 3: einen Längsschnitt durch eine erfindungsgemäße Halterung;
- Fig. 4: eine Seitenansicht einer erfindungsgemäßen Halterung;
- Fig. 5: eine Draufsicht auf eine erfindungsgemäße Halterung in Richtung des Pfeiles V der Fig. 4;
- Fig. 6: ein geändertes Ausführungsbeispiel.

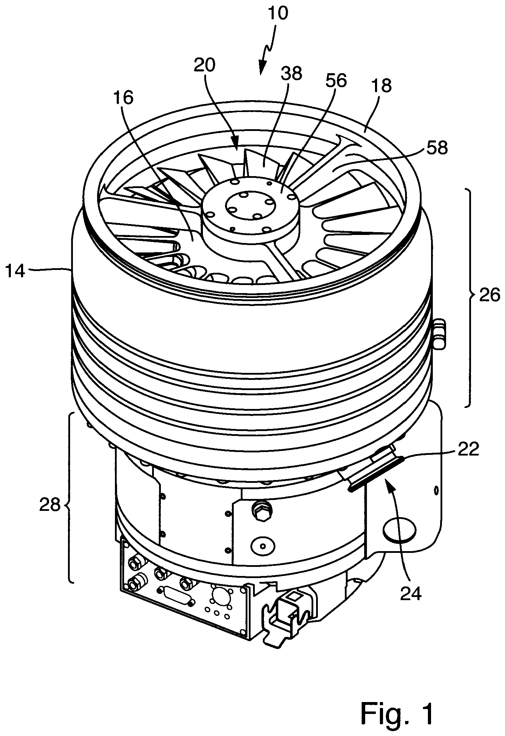

Fig. 1 zeigt eine als Turbomolekularpumpe ausgebildete Vakuumpumpe 10 in perspektivischer Ansicht.

Die Vakuumpumpe 10 umfasst einen Stator, welcher einen Teil eines mehrteiligen Pumpengehäuses 14 umfasst, sowie einen Rotor 16, der gegenüber dem Stator drehend antreibbar gelagert ist.

Die Vakuumpumpe 10 umfasst an ihrer Hochvakuumseite eine von einem Saugflansch 18 umgebene Ansaugöffnung 20 zur Verbindung mit einem zu evakuierenden Volumen und eine im Bereich der Vorvakuumseite der Vakuumpumpe 10 angeordnete, von einem Vorvakuumflansch 22 umgebene Gasaustrittsöffnung 24 zur Verbindung mit einem Vorvakuum.

Der Stator und der Rotor 16 bilden zusammen eine Rotationseinheit 26 der Vakuumpumpe 10, die mit einem Basisabschnitt, beziehungsweise Unterteil 28 der Pumpe 10 lösbar verbunden ist.

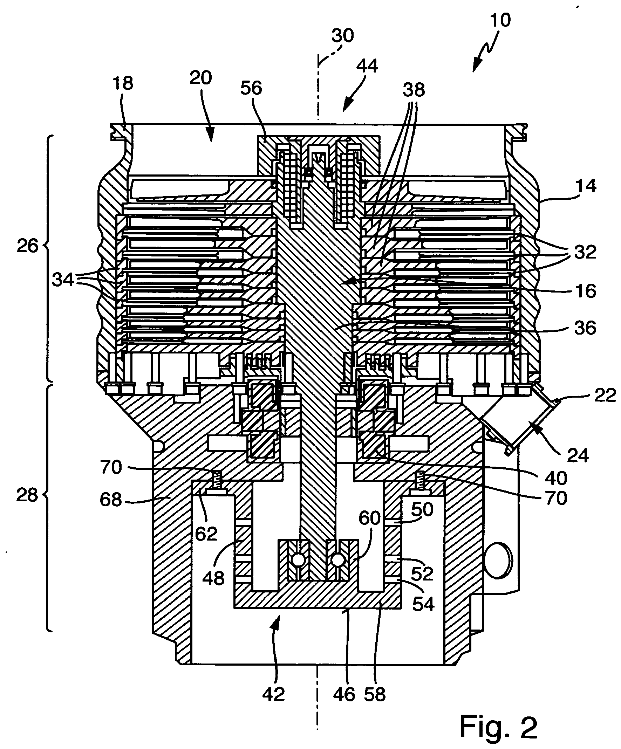

Fig. 2 zeigt die Vakuumpumpe 10 der Fig. 1 in einer entlang ihrer Rotationsachse 30 teilweise geschnittenen Ansicht. Der Stator umfasst mehrere Statorscheiben 32, die in dem Gehäuse 14 angeordnet und über Distanzelemente 34 in einem definierten Abstand voneinander gehalten sind.

Der Rotor 16 umfasst eine Rotorwelle 36, welche mehrere Rotorscheiben 38 trägt, wobei jeweils eine Rotorscheibe 38 in dem Zwischenraum zwischen zwei Statorscheiben 32 angeordnet ist. Die Statorscheiben 32 und Rotorscheiben 38 weisen jeweils eine mehrere Schaufeln umfassende pumpaktive Struktur auf, so dass eine Statorscheibe 32 jeweils mit der benachbarten Rotorscheibe 38 eine Pumpstufe der Turbomolekularpumpe 10 bildet. In dem Unterteil 28 ist eine Antriebseinheit 40 angeordnet, die beispielsweise einen Elektromotor umfassen kann und mit der der Rotor 16 zur Bereitstellung der Pumpwirkung drehend antreibbar ist.

Ferner weist die Pumpe 10 ein vorvakuumseitiges Lager 42 auf, welches zur drehbaren Lagerung des Rotors 16 gegenüber dem Unterteil 28 und dem damit verbundenen Stator ausgebildet ist. Das vorvakuumseitige Lager 42 ist dazu eingerichtet, radiale und axiale Lagerkräfte aufzunehmen und ist vorliegend als ölgeschmiertes Wälzlager ausgebildet.

An ihrer Hochvakuumseite weist die Pumpe 10 ein weiteres, als Permanentmagnetlager ausgebildetes Lager 44 auf, das eine rotorseitige Lagerhälfte und eine statorseitige Lagerhälfte umfasst und das eine drehbare Lagerung des Rotors 16 gegenüber dem Stator bewirkt.

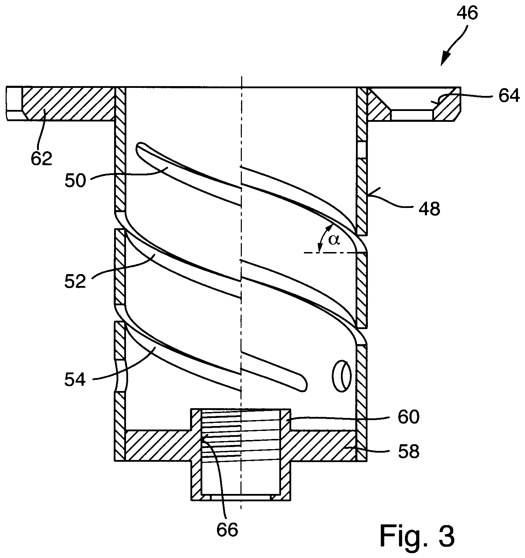

Fig. 2 und Fig. 3 zeigen eine Halterung 46, die eine Hülse 48 aufweist. In der Hülse 48 sind, wie in Fig. 3 dargestellt, schraubenlinienförmige Schlitze 50, 52, 54 angeordnet.

In der Hülse 48 ist darüber hinaus ein Lagerschild 58 angeordnet, in dem wiederum eine Aufnahme 60 für das Kugellager 42 vorgesehen ist.

Die Halterung 46 weist darüber hinaus einen Flansch 62 auf. Mit dem Flansch 62 kann die Halterung 46 statorseitig an einem Gehäusebauteil in der Vakuumpumpe 10 befestigt werden.

Die schraubenlinienförmig angeordneten Schlitze 50, 52, 54 weisen denselben Steigungswinkel auf und sind radialsymmetrisch in der Hülse 48 angeordnet. Die Hülse kann aus Metall und/oder Kunststoff und/oder aus einem piezokeramischen Metall und/oder aus kohlefaserverstärktem Kunststoff bestehen. Das Lagerschild 58 und der Flansch 62 sind aus Metall gebildet. In dem Flansch 62 ist eine Bohrung 64 angeordnet für die Aufnahme einer Schraube.

Die Halterung 46 weist in axialer Richtung eine größere Steifigkeit auf als in radialer Richtung.

Die Steifigkeit wird bestimmt durch das Material, den Durchmesser der Hülse 48, den Abstand der Schlitze 50, 52, 54, die Anzahl der Schlitze 50, 52, 54 sowie die Wandstärke der Hülse 58.

In der Aufnahme 60 ist ein Innengewinde 66 angeordnet. Das Innengewinde 66 nimmt das Kugellager 42, welches ein entsprechendes Außengewinde aufweist, auf.

Die schraubenlinienförmigen Schlitze 50, 52, 54 weisen einen Steigungswinkel α auf.

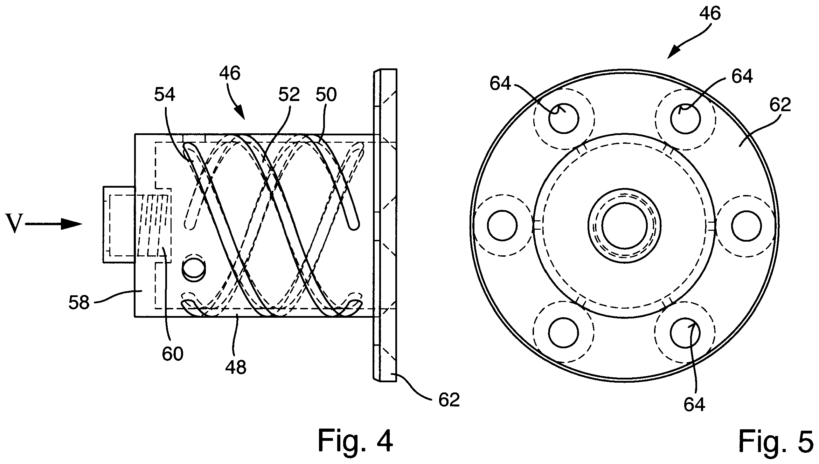

Fig. 4 zeigt die Halterung 46 mit den drei schraubenlinienförmig angeordneten Schlitzen 50, 52, 54, dem Flansch 62 und dem Lagerschild 58, in dem die Aufnahme 60 für das in Fig. 4 nicht dargestellte Kugellager 42 angeordnet ist.

Fig. 5 zeigt den Flansch 62 der Halterung 46 mit den Bohrungen 64. Durch die Bohrungen werden,wie in Fig. 2 dargestellt, Schrauben 70 geführt, die den Flansch 62 mit dem Gehäusebauteil 68 fest verbinden.

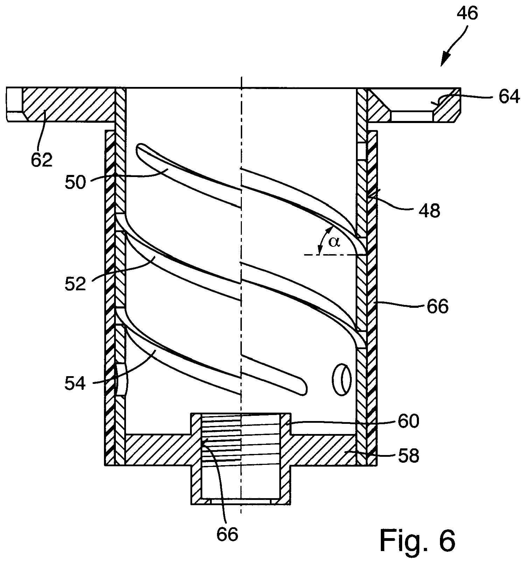

Fig. 6 zeigt die Hülse 46 gemäß Fig. 3. Gleiche Teile sind mit gleichen Bezugszahlen versehen.

Gemäß Fig. 6 ist auf der Hülse 48 ein Schlauch 66 angeordnet, der aus Gummi besteht. Hierdurch wird die Dämpfungswirkung verändert. Der Schlauch 66 kann auch aus anderen Materialien bestehen.

Auf der Hülse 48 kann auch ein piezokeramische Folie angeordnet werden, um Verformungen der Hülse 48 messtechnisch zu erfassen.

### Bezugszahlen

- 10: Vakuumpumpe
- 13: Gehäuse
- 16: Rotor
- 18: Saugflansch
- 20: Ansaugöffnung
- 22: Vorvakuumflansch
- 24: Gasaustrittsöffnung
- 26: Rotationseinheit
- 28: Unterteil
- 30: Rotationsachse
- 32: Statorscheiben
- 34: Distanzelement
- 36: Rotorwelle
- 38: Rotorscheibe
- 40: Antriebseinheit
- 42: Kugellager
- 44: Permanentmagnetlager
- 46: Halterung
- 48: Hülse
- 50: Schlitz
- 52: Schlitz
- 54: Schlitz
- 56: Trägerabschnitt
- 58: Lagerschild
- 60: Aufnahme
- 62: Flansch
- 64: Bohrungen
- 66: Schlauch
- 68: Gehäusebauteil
- 70: Schrauben
- α: Steigungswinkel

## Patentansprüche

1. Anordnung zur Lagerung einer Welle (36) einer Vakuumpumpe (10) mit einem Gehäuse (13), mit einem ersten Lager (44), welches Kräfte in Richtung der Wellenachse erzeugt und eine axiale Steifigkeit besitzt, mit einem zweiten Lager (42), welches als Wälzlager ausgebildet ist und in einer Halterung (46) mit axialer und radialer Steifigkeit angeordnet ist, wobei die Halterung (46) eine Hülse (48) aufweist, und wobei die Hülse (48) wenigstens einen Schlitz (50, 52, 54) aufweist, **dadurch gekennzeichnet , dass** der Schlitz (50, 52) schraubenlinienförmig in der Hülse (48) angeordnet ist.

2. Anordnung nach Anspruch 1, **dadurch gekennzeichnet, dass** drei Schlitze (50, 52, 54) in der Hülse (48) angeordnet sind.

3. Anordnung nach Anspruch 1 oder 2, **dadurch gekennzeichnet, dass** die Steifigkeit der Halterung (46) in axialer Richtung größer ist als in radialer Richtung.

4. Anordnung nach einem der vorhergehenden Ansprüche, **dadurch gekennzeichnet, dass** die wenigstens zwei schraubenlinienförmigen Schlitze (50, 52, 54) parallel zueinander angeordnet sind.

5. Anordnung nach einem der vorhergehenden Ansprüche, **dadurch gekennzeichnet, dass** die schraubenlinienförmigen Schlitze (50, 52, 54) radialsymmetrisch in der Hülse angeordnet sind.

6. Anordnung nach einem der vorhergehenden Ansprüche, **dadurch gekennzeichnet, dass** die schraubenlinienförmigen Schlitze (50, 52, 54) tordierend ausgebildet sind.

7. Anordnung nach einem der vorhergehenden Ansprüche, **dadurch gekennzeichnet, dass** ein Faserwicklungswinkel eines kohlefaserverstärkten Kunststoffes einem Steigungswinkel (α) der schraubenlinienförmigen Schlitze (50, 52, 54) entspricht.

8. Anordnung nach einem der vorhergehenden Ansprüche, **dadurch gekennzeichnet, dass** an der Hülse (48) ein Lagerschild (58) für das Wälzlager (42) angeordnet ist.

9. Anordnung nach einem der vorhergehenden Ansprüche, **dadurch gekennzeichnet, dass** die Halterung (46) einen Flansch (62) aufweist.

10. Anordnung nach einem der vorhergehenden Ansprüche, **dadurch gekennzeichnet, dass** das Wälzlager (42) als ölgeschmiertes Wälzlager (42) ausgebildet ist, und dass der wenigstens eine Schlitz (50, 52, 54) als wenigstens teilweise ölfreier Schlitz (50, 52, 54) ausgebildet ist.

11. Anordnung nach einem der vorhergehenden Ansprüche, **dadurch gekennzeichnet, dass** auf der Hülse (58) wenigstens teilweise eine zweite Hülse und/oder ein Schlauch (66) angeordnet ist, insbesondere dass die zweite Hülse eine größere Elastizität aufweist als die erste Hülse.

12. Anordnung nach einem der vorhergehenden Ansprüche, **dadurch gekennzeichnet, dass** für die Ölschmierung des Wälzlagers (42) eine Ölpumpe vorgesehen ist.

13. Anordnung nach Anspruch 12, **dadurch gekennzeichnet, dass** eine Spritzmutter und wenigstens ein Filzpaket für das Öl vorgesehen sind.

14. Anordnung nach einem der vorhergehenden Ansprüche, **dadurch gekennzeichnet, dass** an der Hülse (48) ein Lagerschild (58) angeordnet ist, an dem eine Aufnahme (60) für das Wälzlager (42) angeordnet ist.

15. Anordnung nach Anspruch 14, **dadurch gekennzeichnet, dass** das Lagerschild (58) an und/oder in der Hülse (48) eingeklebt oder eingeschrumpft ist und/oder dass das Wälzlager (42) in dem Lagerschild (58) verschraubt ist.

## Claims

1. An arrangement for mounting a shaft (36) of a vacuum pump (10) with a housing (13), with a first bearing (44), which produces forces in the direction of the shaft axis and has an axial stiffness, with a second bearing (42), which is formed as a roller bearing and is arranged in a mounting (46) with axial and radial stiffness, the mounting (46) having a tubular wall (48), and the tubular wall (48) having at least one slot (50, 52, 54) **characterised in that** the slot (50, 52) is arranged helically in the tubular wall (48).

2. An arrangement according to claim 1, **characterised in that** three slots (50, 52, 54) are arranged in the tubular wall (48).

3. An arrangement according to claim 1 or 2, **characterised in that** the stiffness of the mounting (46) in the axial direction is greater than in the radial direction.

4. An arrangement according to any of the preceding claims, **characterised in that** the at least two helical slots (50, 52, 54) are arranged parallel to each other.

5. An arrangement according to any preceding claim, **characterised in that** the helical slots (50, 52, 54) are arranged radially symmetrically in the tubular wall.

6. An arrangement according to any preceding claim, **characterised in that** the helical slots (50, 52, 54) are arranged in twisting manner.

7. An arrangement according to any preceding claim, **characterised in that** a fibre-winding angle of a carbon-fibre reinforced plastics material corresponds to a pitch angle (α) of the helical slots (50, 52, 54).

8. An arrangement according to any preceding claim, **characterised in that** there is arranged on the tubular wall (48) a bearing plate (58) for the roller bearing (42).

9. An arrangement according to any preceding claim, **characterised in that** the mounting (46) has a flange (62).

10. An arrangement according to any preceding claim, **characterised in that** the roller bearing (42) is formed as an oil-lubricated roller bearing (42) and **in that** the at least one slot (50, 52, 54) is formed as an at least partly oil-free slot (50, 52, 54).

11. An arrangement according to any preceding claim, **characterised in that** there is arranged at least partly on the tubular wall (58) a second tubular wall and/or a hose (66), in particular **in that** the second tubular wall has a greater elasticity than the first tubular wall.

12. An arrangement according to any preceding claim, **characterised in that** an oil pump is provided for the oil lubrication of the roller bearing (42).

13. An arrangement according to claim 12, **characterised in that** a lubrication nut and at least one felt element are provided for the oil.

14. An arrangement according to any preceding claim, **characterised in that** there is arranged on the tubular wall (48) a bearing plate (58), on which a receptacle (60) for the roller bearing (42) is arranged.

15. An arrangement according to claim 14, **characterised in that** the bearing plate (58) is adhered or shrunk on and/or in the tubular wall (48) and/or **in that** the roller bearing (42) is screwed in the bearing plate (58).

## Revendications

1. Arrangement pour loger un arbre (36) d'une pompe à vide (10) comprenant un carter (13), doté d'un premier palier (44), qui génère des forces dans la direction de l'axe d'arbre et possède une rigidité axiale, doté d'un deuxième palier (42), qui est réalisé sous la forme d'un palier à roulement et est disposé dans un support (46) avec rigidité axiale et radiale, le support (46) possédant une douille (48) et la douille (48) possédant au moins une fente (50, 52, 54), **caractérisé en ce que** la fente (50, 52) est disposée en forme d'hélice dans la douille (48).

2. Arrangement selon la revendication 1, **caractérisé en ce que** trois fentes (50, 52, 54) sont disposées dans la douille (48).

3. Arrangement selon la revendication 1 ou 2, **caractérisé en ce que** la rigidité du support (46) dans la direction axiale est supérieure à celle dans la direction radiale.

4. Arrangement selon l'une des revendications précédentes, **caractérisé en ce que** les au moins deux fentes (50, 52, 54) en forme d'hélice sont disposées parallèles l'une par rapport à l'autre.

5. Arrangement selon l'une des revendications précédentes, **caractérisé en ce que** les fentes (50, 52, 54) en forme d'hélice sont disposées selon une symétrie radiale dans la douille.

6. Arrangement selon l'une des revendications précédentes, **caractérisé en ce que** les fentes (50, 52, 54) en forme d'hélice sont de configuration torsadée.

7. Arrangement selon l'une des revendications précédentes, **caractérisé en ce qu'**un angle d'enroulement des fibres d'une matière plastique renforcée de fibres de carbone correspond à un angle d'inclinaison (α) des fentes (50, 52, 54) en forme d'hélice.

8. Arrangement selon l'une des revendications précédentes, **caractérisé en ce qu'**un flasque de palier (58) pour le palier à roulement (42) est disposé au niveau de la douille (48).

9. Arrangement selon l'une des revendications précédentes, **caractérisé en ce que** le support (46) possède une bride (62).

10. Arrangement selon l'une des revendications précédentes, **caractérisé en ce que** le palier à roulement (42) est réalisé sous la forme d'un palier à roulement (42) lubrifié à l'huile, et **en ce que** l'au moins une fente (50, 52, 54) est réalisée sous la forme d'une fente (50, 52, 54) au moins partiellement exempte d'huile.

11. Arrangement selon l'une des revendications précédentes, **caractérisé en ce qu'**au moins une deuxième douille et/ou un tuyau (66) est disposé au moins partiellement sur la douille (58), notamment **en ce que** la deuxième douille possède une élasticité supérieure à celle de la première douille.

12. Arrangement selon l'une des revendications précédentes, **caractérisé en ce qu'**une pompe à huile est présente pour la lubrification à l'huile du palier à roulement (42).

13. Arrangement selon la revendication 12, **caractérisé en ce qu'**un écrou d'injection et au moins un bloc de feutre sont présents pour l'huile.

14. Arrangement selon l'une des revendications précédentes, **caractérisé en ce qu'**un flasque de palier (58) est disposé au niveau de la douille (48), au niveau duquel est disposé un logement (60) pour le palier de roulement (42).

15. Arrangement selon la revendication 14, **caractérisé en ce que** le flasque de palier (58) est collé ou inséré sur et/ou dans la douille (48) et/ou **en ce que** le palier à roulement (42) est vissé dans le flasque de palier (58).
